# EUROPÄISCHE PATENTANMELDUNG

(11) **EP 2 209 069 A2**
(43) Veröffentlichungstag der Anmeldung: **21.07.2010**
(21) Anmeldenummer: 09175842.5
(22) Anmeldetag: 12.11.2009
(51) Int. Cl.: G06F 13/40

(54) **Anordnung mit einem Computer und einem elektronischen Peripheriegerät sowie Computer, Peripheriegerät und Verfahren zur Energieversorgung eines Computers**

(30) Priorität: 08.01.2009 DE 102009004098
(71) Anmelder: Sinitec Vertriebsgesellschaft mbH, 80807 München (DE)
(72) Erfinder: Jacob, Markus, 61348, Bad Homburg v.d.H. (DE)
(74) Vertreter: Epping, Wilhelm

(57) **Zusammenfassung**

Die Erfindung betrifft eine Anordnung, umfassend einen Computer (1) und ein elektronisches Peripheriegerät (2), wobei der Computer (1) mit dem Peripheriegerät (2) über ein Kabel (7) einer Datenschnittstelle (6a,6b) verbunden ist und der Computer (1) dazu eingerichtet ist, an einer Versorgungsleitung (VBUS) der Datenschnittstelle (6a,6b) eine elektrische Spannung bereitzustellen, sodass das Peripheriegerät (2) der Versorgungsleitung (VBUS) einen elektrischen Strom zu seiner Energieversorgung entnehmen kann. Erfindungsgemäß ist das Peripheriegerät (2) dazu eingerichtet, an der Versorgungsleitung (VBUS) eine elektrische Spannung bereitzustellen, sodass der Computer (1) der Versorgungsleitung (VBUS) einen elektrischen Strom zu seiner Energieversorgung entnehmen kann.

Ferner wird ein Computer (1), ein Peripheriegerät (2) sowie ein Verfahren zur Energieversorgung eines Computers (1) beschrieben.

## Beschreibung

Die Erfindung betrifft eine Anordnung, umfassend einen Computer und ein elektronisches Peripheriegerät, wobei der Computer mit dem Peripheriegerät über ein Kabel einer Datenschnittstelle verbunden ist und der Computer dazu eingerichtet ist, an einer Versorgungsleitung der Datenschnittstelle eine elektrische Spannung bereitzustellen, sodass das Peripheriegerät der Versorgungsleitung einen elektrischen Strom zu seiner Energieversorgung entnehmen kann.

Ferner betrifft die Erfindung einen Computer mit einer Datenschnittstelle zum Anschluss eines Peripheriegerätes, wobei der Computer an einer Versorgungsleitung der Datenschnittstelle eine Spannung zur Versorgung des Peripheriegerätes bereitstellt.

Weiterhin betrifft die Erfindung ein Peripheriegerät mit einer Datenschnittstelle zum Anschluss an einen Computer.

Zudem betrifft die Erfindung ein Verfahren zur Energieversorgung eines Computers, wobei der Computer über ein Kabel einer Datenschnittstelle mit einem Peripheriegerät verbunden ist und der Computer dazu eingerichtet ist, über einen Controller-Baustein eine elektrische Spannung bereitzustellen zur Beaufschlagung einer Versorgungsleitung der Datenschnittstelle.

Es ist bekannt und üblich, Computer, insbesondere Notebooks, mit Peripheriegeräten, beispielsweise Druckern, externen Festplatten, optischen Laufwerken oder Personal Digital Assistants (PDAs) zu verbinden. Eine Verbindung wird dabei meist über den USB-Standard (Universal Serial Bus) hergestellt. Auch eine Verbindung über eSATA (external serial advanced technology attachment) wird vereinzelt eingesetzt. Eine USB-Verbindung erlaubt den Datenaustausch zwischen dem Computer und einem angeschlossenen Peripheriegerät. Zudem ist es möglich, das Peripheriegerät über eine separate Versorgungsleitung der USB-Datenschnittstelle mit Energie aus dem Computer zu versorgen. Gemäß dem USB-Standard stellt der Computer an der Versorgungsleitung eine Spannung von 5 V zur Verfügung, wobei ein angeschlossenes Peripheriegerät dieser Versorgungsleitung einen elektrischen Strom von bis zu 500 mA entnehmen kann. Gegebenenfalls sind auch höhere Ströme, teilweise bis 1 A, möglich.

Eine Stromversorgung eines Peripheriegerätes über die USB-Schnittstelle macht ein externes Netzteil für das Peripheriegerät überflüssig. Dies gestaltet eine mobile Anwendung von Peripheriegeräten gerade bei Einsatz eines Notebooks als komfortabel, hat jedoch den Nachteil, dass sich der Leistungsverbrauch des Notebooks erhöht, da das Peripheriegerät zusätzlich mitversorgt werden muss. Gerade externe Festplatten mit rotierenden mechanischen Teilen besitzen im Betrieb eine hohe Leistungsaufnahme. Auch PDAs, die zum Laden ihres Akkus per USB an das Notebook angeschlossen sind, beziehen eine beträchtliche Leistung aus dem Computer.

Das bedeutet, dass sich die Akkulaufzeit eines Notebooks bei einem angeschlossenen Peripheriegerät je nach Leistungsaufnahme des Peripheriegerätes stark verkürzen kann.

Es existieren bereits Lösungen, Notebooks mit zusätzlichen Akkus auszustatten, um die Akkulaufzeit zu erhöhen. Die Akkus können dabei als externe Batteriepacks vorhanden oder beispielsweise als Erweiterungsmodul in einem Wechselschacht des Notebooks integriert sein. Ferner existieren Lösungen, den internen Akku mittels Generatoren, Solarzellen oder anderen Stromversorgern aufzuladen, falls kein Anschluss an ein Stromnetz verfügbar ist. Der Nachteil dieser Lösungen besteht jedoch darin, dass ein Wechselschacht belegt ist oder zusätzliche Teile mitgeführt werden müssen, sodass die Mobilität deutlich eingeschränkt wird.

Daher ist es Aufgabe der Erfindung, eine Anordnung mit einem Computer und einem Peripheriegerät, sowie einen Computer, ein Peripheriegerät und ein Verfahren zur Energieversorgung eines Computers zu beschreiben, sodass eine verbesserte Energieversorgung des Computers bei gleichzeitiger Mobilitätserhaltung gewährleistet ist.

Diese Aufgabe wird in einem ersten Aspekt durch eine Anordnung, umfassend einen Computer und ein elektronisches Peripheriegerät, der eingangs genannten Art dadurch gelöst, dass das Peripheriegerät dazu eingerichtet ist, an der Versorgungsleitung eine elektrische Spannung bereitzustellen, sodass der Computer der Versorgungsleitung einen elektrischen Strom zu seiner Energieversorgung entnehmen kann.

Dies bedeutet, dass nicht nur ein Computer Energie für ein Peripheriegerät über eine Datenschnittstelle bereitstellt, sondern auch ein Peripheriegerät dem Computer Energie über diese Datenschnittstelle bereitstellt. Die Datenschnittstelle weist dazu eine einzige Versorgungsleitung auf, die mit einer Versorgungsspannung gegenüber einem Massepotential beaufschlagt werden kann. Dabei stellt entweder der Computer oder das Peripheriegerät die Spannung zur Versorgung des jeweils anderen Gerätes an dieser einzigen Versorgungsleitung bereit.

Durch diese Lösung ergibt sich also der Vorteil, dass beispielsweise ein Akku eines Notebooks durch ein angeschlossenes Peripheriegerät aufgeladen werden kann, sodass die Gesamtakkulaufzeit des Notebooks verlängert wird. Ein Peripheriegerät, wie zum Beispiel eine externe Festplatte oder ein PDA, kann dabei mit einem eigenen Akku ausgerüstet sein, sodass dieser Akku dem Notebook als Zusatzbatterie dient. Die Energie wird über die Datenschnittstelle vom Peripheriegerät zum Notebook übertragen. Ist das Peripheriegerät in Betrieb, so kann es weiterhin durch seinen eigenen Akku versorgt werden. Dadurch reduziert sich die Leistungsaufnahme des Peripheriegerätes aus dem Notebook, wodurch eine lange Akkulaufzeit des Notebooks erhalten bleibt.

Die Erfindung erhöht also die Akkulaufzeit eines Computers bei gleichzeitiger Mobilitätserhaltung, wobei neben dem ohnehin verwendeten Peripheriegerät und dem Computer keine zusätzlichen Komponenten, wie beispielsweise externe Batterien oder Solarzellen, mitgeführt werden müssen.

In einer Ausführungsform der Anordnung eines Computers mit einem Peripheriegerät ist die vom Peripheriegerät bereitgestellte Spannung größer als die vom Computer bereitgestellte Spannung. Dies erlaubt einem Computer, der selbst eine Spannung - zum Beispiel 5 V - an der Versorgungsleitung der Datenschnittstelle bereitstellt, zu erkennen, ob ein angeschlossenes Peripheriegerät eine Spannung zur Versorgung des Computers bereitstellt oder nicht. Beaufschlagt ein Peripheriegerät die Versorgungsleitung beispielsweise mit einer Spannung von 6 V, so kann der Computer diese Spannungsdifferenz erkennen und der Versorgungsleitung Strom entnehmen.

In einer weiteren Ausführung weisen die vom Peripheriegerät bereitgestellte Spannung und die vom Computer bereitgestellte Spannung einen gleichen Wert auf, wobei die Spannung alternativ vom Peripheriegerät oder vom Computer bereitgestellt wird. Das bedeutet, dass sowohl der Computer als auch das Peripheriegerät beispielsweise 5 V an der Versorgungsleitung der Datenschnittstelle bereitstellen können, wobei eine Bereitstellung zeitlich versetzt oder prioritätsgesteuert erfolgt. Stellt der Computer eine Spannung bereit, so kann das Peripheriegerät, wie zum Beispiel ein PDA, der Datenschnittstelle Strom zu seinem Betrieb oder zum Laden seines Akkus entnehmen. Sinkt jedoch die Akkukapazität des Computers unter einen vorbestimmten, kritischen Grenzwert, so stellt der Computer seine Spannungsversorgung ein. Dies kann das Peripheriegerät erkennen und seinerseits eine Spannung an der Versorgungsleitung zur Verfügung stellen, sodass es nun dem Computer möglich ist, der Versorgungsleitung Strom zu entnehmen.

In einem weiteren Aspekt wird die Aufgabe durch einen Computer der eingangs genannten Art gelöst, der Mittel aufweist zur Detektion einer Spannung, die dem Computer an der Versorgungsleitung der Datenschnittstelle bereitgestellt wird, wobei der Computer weiterhin Mittel aufweist zur Entnahme eines Stroms aus der Versorgungsleitung. Der Computer erkennt also, ob beispielsweise ein angeschlossenes Peripheriegerät eine Spannung an der Versorgungsleitung bereitstellt. Ist dies der Fall, so entnimmt der Computer Strom aus der Versorgungsleitung.

Außerdem wird die Aufgabe durch ein Peripheriegerät der eingangs genannten Art gelöst, das dazu eingerichtet ist, eine Spannung an einer Versorgungsleitung der Datenschnittstelle bereitzustellen.

Vorzugsweise ist das Peripheriegerät dabei dazu eingerichtet, eine Spannung an der Versorgungsleitung nur dann bereitzustellen, falls ein angeschlossener Computer keine Spannung an der Versorgungsleitung bereitstellt. Beendet ein angeschlossener Computer also seine Versorgung der Schnittstelle mit einer computerseitigen Spannung, so kann das Peripheriegerät dies erkennen und seinerseits eine Spannung an der Versorgungsleitung bereitstellen.

Schließlich wird die Aufgabe auch durch ein Verfahren der eingangs genannten Art dadurch gelöst, dass eine Komparatorschaltung im Computer die vom Controller-Baustein bereitgestellte Spannung als Referenzwert mit der Spannung auf der Versorgungsleitung vergleicht und ein Schaltelement leitend schaltet, falls die Spannung an der Versorgungsleitung höher ist als der Referenzwert der bereitgestellten Spannung des Controller-Bausteins. Dieses Verfahren erlaubt eine einfache Detektion im Computer, ob ein Peripheriegerät eine Spannung zur Versorgung des Computers bereitstellen kann oder nicht. Wird das Schaltelement leitend geschaltet, so kann der Versorgungsleitung ein Strom entnommen und beispielsweise einer Ladeschaltung zum Laden einer wieder aufladbaren Batterie im Computer zugeführt werden.

Weitere Ausgestaltungen sind in den Unteransprüchen sowie in der Figurenbeschreibung offenbart.

Die Erfindung wird anhand mehrerer Zeichnungen näher erläutert.

Es zeigen:
- Figur 1: eine Anordnung, bestehend aus einem tragbaren Computer und einem über eine Datenschnittstelle angeschlossenen Peripheriegerät,
- Figur 2: ein schematisiertes Schnittbild einer Anordnung, bestehend aus einem tragbaren Computer und einem angeschlossenen Peripheriegerät und
- Figur 3: ein Blockschaltbild zur computerseitigen Entnahme von Strom aus einer Versorgungsleitung.

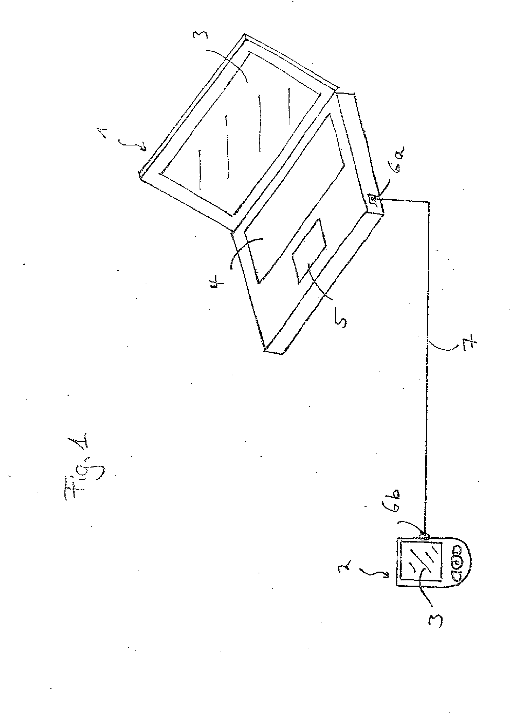

Figur 1 zeigt eine Anordnung, bestehend aus einem tragbaren Computer 1 und einem Peripheriegerät 2, welches über ein Kabel 7 einer Datenschnittstelle 6a, 6b mit dem tragbaren Computer 1 verbunden ist. An der Schnittstelle 6a besitzt das Kabel 7 einen Host-Stecker zum Anschluss an den Computer 1. An der Schnittstelle 6b besitzt das Kabel 7 einen Client-Stecker zum Anschluss an das Peripheriegerät 2.

Der tragbare Computer 1 ist in diesem Ausführungsbeispiel ein Notebook mit einem Display 3, einer Tastatur 4 sowie einem Touchpad 5. Das Peripheriegerät 2 ist in diesem Ausführungsbeispiel ein PDA mit einem Display 3. Das Peripheriegerät 2 kann beispielsweise mit dem Computer 1 über das Kabel 7 verbunden werden, falls Daten zwischen dem Computer 1 und dem Peripheriegerät 2 ausgetauscht werden sollen. Dabei fungiert der Computer 1 als Host, der erkennt, ob ein Peripheriegerät 2 an der Datenschnittstelle 6a angeschlossen ist, Befehle sendet und den Datenfluss steuert. Das Peripheriegerät 2 fungiert als Client, der über die Befehle des Hosts gesteuert wird. Zusätzlich kann über eine Versorgungsleitung im Kabel 7 Energie vom Computer 1 zum Peripheriegerät 2 übertragen werden, falls das Peripheriegerät 2 beispielsweise einen Akku besitzt und dieser geladen werden soll. Die Datenschnittstelle 6a, 6b sowie das Kabel 7 können dabei beispielsweise dem USB- oder eSATA-Standard oder einem anderen gängigen Bus-Standard entsprechen. Es ist denkbar, anstelle eines PDAs jegliches anderes Peripheriegerät 2, wie beispielsweise eine externe Festplatte, ein optisches Laufwerk oder einen Drucker, über ein Kabel 7 mit dem Computer 1 zu verbinden.

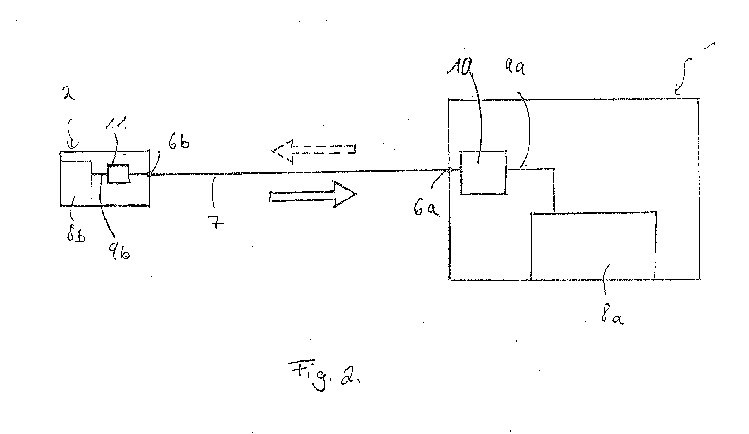

Figur 2 zeigt ein schematisiertes Schnittbild einer Anordnung, bestehend aus einem Computer 1 und einem Peripheriegerät 2, wobei der Computer 1 mit dem Peripheriegerät 2 über ein Kabel 7 an einer Datenschnittstelle 6a, 6b verbunden ist. Der Computer 1 weist einen Akku 8a auf, der über eine elektrische Verbindung 9a mit der Schnittstelle 6a elektrisch verbunden ist. Ferner weist der Computer 1 einen Host-Controller 10 auf, der die Datenübertragung sowie das Bereitstellen einer Spannung an der Versorgungsleitung des Kabels 7 steuert. Das Peripheriegerät 2 weist ebenfalls einen Akku 8b sowie eine elektrische Verbindung 9b zwischen der Schnittstelle 6b und dem Akku 8b auf. Ferner ist im Peripheriegerät 2 ein Logik-Baustein 11 vorhanden, der die Spannung auf der Versorgungsleitung des Kabels 7 erfasst und dem Akku 8b zuführt.

Zum Datenaustausch kann ein Datenfluss zwischen dem Computer 1, der als Host wirkt, und dem Peripheriegerät 2, das als Client wirkt, hergestellt werden. Ferner kann vom Computer 1 eine Spannung an der Versorgungsleitung des Kabels 7 über den Host-Controller 10 bereitgestellt werden, sodass das Peripheriegerät 2 der Datenschnittstelle 6b einen elektrischen Strom zu seiner Energieversorgung entnehmen kann. Dadurch kann beispielsweise der Akku 8b des Peripheriegerätes 2 geladen werden. Der gesamte Vorgang des Energieflusses vom Computer 1 zum Peripheriegerät 2 ist durch einen gestrichelten Blockpfeil dargestellt, der vom Computer 1 zum Peripheriegerät 2 weist.

Jedoch kann auch das Peripheriegerät 2 eine Spannung an der Versorgungsleitung des Kabels 7 bereitstellen, sodass der Computer 1 der Datenschnittstelle 6a einen elektrischen Strom zu seiner Energieversorgung entnehmen kann. Dazu erzeugt die Logikeinheit 11 im Peripheriegerät 2 einen Schaltbefehl, mit dessen Hilfe eine Spannung aus dem Akku 8b des Peripheriegeräts 2 an die Datenschnittstelle 6b gelegt wird. Der Computer 1 kann schließlich erkennen, ob das Peripheriegerät 2 eine ausreichende Spannung an die Datenschnittstelle 6b gelegt hat. Ist dies der Fall, so entnimmt der Computer 1 der Versorgungsleitung des Kabels 7 an seiner Datenschnittstelle 6a einen elektrischen Strom, wodurch der Akku 8a des Computers 1 geladen werden kann. Das Kabel 7 weist eine einzige Versorgungsleitung auf, über die entweder der Computer 1 dem Peripheriegerät 2 oder das Peripheriegerät 2 dem Computer 1 eine Spannung zur Verfügung stellt. Der Energiefluss vom Peripheriegerät 2 zum Computer 1 ist durch einen Blockpfeil dargestellt, der vom Peripheriegerät 2 zum Computer 1 hinweist.

Das Peripheriegerät 2 wirkt als zusätzliches Batteriemodul für den Computer 1, ohne dass weitere Komponenten mitgeführt werden müssen oder spezielle Versorgungsleitungen zwischen dem Peripheriegerät 2 und dem Computer 1 eingerichtet werden müssen. Dadurch kann die Akkulaufzeit sowie der mobile Betrieb des Computers 1 erhöht werden, ohne seine Mobilität einzuschränken.

Es ist denkbar, jegliches Peripheriegerät 2, beispielsweise einen PDA, eine externe Festplatte, ein optisches Laufwerk oder einen Drucker, mit einem Zusatzakku 8b auszurüsten, der dem Computer 1 über die Datenschnittstelle 6b auf der einzigen Versorgungsleitung im Kabel 7 Energie zur Verfügung stellt. Ferner ist denkbar, dass die Logikeinheit 11 im Peripheriegerät 2 die Spannung auf der Datenschnittstelle 6b überwacht, und das Peripheriegerät 2 veranlasst, eine Spannung aus seinem Akku 8b an der Datenschnittstelle 6b bereitzustellen, falls der Computer 1 selbst Energie benötigt. Dabei kann eine Signalisierung vom Computer 1 dadurch erfolgen, dass der Computer 1 keine Spannung mehr bereitstellt. Es ist jedoch auch denkbar, dass der Computer 1 dem Peripheriegerät 2 einen entsprechenden Befehl über die Datenleitungen der Datenschnittstelle 6a, 6b sendet.

Stellt das Peripheriegerät 2 dem Computer 1 eine Spannung über die Versorgungsleitung des Kabels 7 zur Verfügung, so kann das Peripheriegerät einen Standby-Zustand einnehmen. Auf diese Weise wird gewährleistet, dass das Peripheriegerät 2 selbst nur eine sehr geringe Energie benötigt und hauptsächlich dem Computer 1 Energie bereitstellt. Es ist auch möglich, dass das Peripheriegerät 2 dem Computer 1 eine Warnung über die Datenschnittstelle 6a, 6b sendet, falls der Akku 8b des Peripheriegerätes 2 einen kritischen Ladezustand unterschreitet. Besitzen daraufhin beide Akkus 8a, 8b einen kritischen Ladezustand, so fahren der Computer 1 sowie das Peripheriegerät 2 automatisch herunter und schalten sich ab.

Der Akku 8b im Peripheriegerät 2 kann weiterhin bei Benutzung des Peripheriegeräts 2 dazu verwendet werden, das Peripheriegerät 2 selbst zu versorgen. Dies gewährleistet eine Reduktion der Leistungsaufnahme des Peripheriegeräts 2 aus der Datenschnittstelle 6b, sodass der Computer 1 das Peripheriegerät 2 nicht mehr mitversorgen muss. In einer nicht dargestellten Ausführungsform können der Computer 1 sowie das Peripheriegerät 2 ein Netzteil mit einem Netzstecker zum Anschluss an das Stromnetz aufweisen. Dies gibt die Möglichkeit, die Akkus 8a, 8b im Computer 1 und im Peripheriegerät 2 über eine externe Stromquelle wieder aufzuladen. Wird das Netzteil des Computers 1 nicht mitgeführt, so kann der Akku 8a des Computers 1 dennoch über die Datenschnittstelle 6a, 6b mittels des Netzteils des Peripheriegerätes 2 geladen werden.

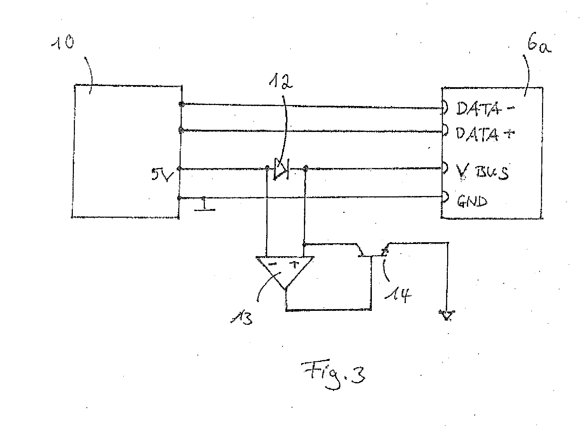

Figur 3 zeigt ein Blockschaltbild einer Schaltung zur Entnahme von Energie aus der Versorgungsleitung VBUS auf Seiten des Computers 1. In Figur 3 ist ein Host-Controller 10 sowie die elektrische Konfiguration der Datenschnittstelle 6a dargestellt. Vom Host-Controller 10 verlaufen mehrere elektrische Leitungen zur Datenschnittstelle 6a. Dabei dienen zwei Leitungen DATA- und DATA+ dem Datenaustausch zwischen dem Computer 1 und einem Peripheriegerät 2 gemäß den Figuren 1 und 2. Eine dritte Leitung stellt die vorgenannte Versorgungsleitung VBUS dar, die der Spannungsversorgung dient. Eine vierte Leitung stellt die Masseleitung GND zum Herstellen eines Bezugspotentials dar.

Der Host-Controller 10 stellt an der Versorgungsleitung VBUS an seinem Ausgang eine Spannung von 5 V zur Verfügung. Damit entspricht die Konfiguration der Datenschnittstelle 6a in Figur 3 dem USB-Standard. Zusätzlich ist auf der Versorgungsleitung zwischen dem Host-Controller 10 und der Datenschnittstelle 6a eine Diode 12 verschaltet, wobei ein Komparator 13 das Potential am Host-Controller 10 sowie auf der Versorgungsleitung VBUS der Datenschnittstelle 6a abgreift. Der Komparator 13 vergleicht also die Spannung, welche vom Host-Controller 10 bereitgestellt wird, mit der Spannung, die auf der Versorgungsleitung VBUS liegt. Stellt beispielsweise ein Peripheriegerät 2 eine Spannung auf der Versorgungsleitung VBUS bereit, die höher als 5 V - zum Beispiel 6 V - ist, so erzeugt der Komparator 13 eine Ausgangsspannung, die einen Basisstrom zum Ansteuern eines Bipolartransistors 14 erzeugt. Der Transistor 14 wird dabei in einen leitenden Zustand versetzt, sodass der Versorgungsleitung VBUS ein elektrischer Strom entnommen werden kann. Aufgrund des höheren Potentials der Versorgungsleitung VBUS im Vergleich zum bereitgestellten Potential des Host-Controllers 10 liegt die Diode 12 in Sperrrichtung, sodass verhindert wird, dass ein elektrischer Strom in den Host-Controller 10 fließt und diesen beschädigt. Weiterhin dient die Diode 12 der Bildung klarer Potentialgrenzen zwischen dem Host-Controller 10 sowie der Versorgungsleitung VBUS.

Es wäre auch denkbar, dass die von einem Peripheriegerät 2 bereitgestellte Spannung an der Versorgungsleitung VBUS ebenfalls 5 V beträgt. Allerdings erfolgt ein Bereitstellen einer Spannung an der Versorgungsleitung VBUS dann prioritätsgesteuert, sodass ein Peripheriegerät 2 eine Spannung von 5 V nur dann an der Versorgungsleitung VBUS bereitstellt, falls der Host-Controller 10 keine Spannung von 5 V bereitstellt. Dies kann beispielsweise der Fall sein, falls der Computer 1 als Host erkennt, dass sein Akku 8a gemäß Figur 2 einen kritischen Ladezustand unterschreitet. Dann wird die Versorgung eines angeschlossenen Peripheriegerätes 2 eingestellt, wobei das Peripheriegerät 2 selbst eine Versorgungsspannung auf die Versorgungsleitung VBUS legt. Dadurch ist es einem Computer 1 möglich, über den schematischen Schaltungsaufbau gemäß Figur 3 der Versorgungsleitung VBUS einen elektrischen Strom zu entnehmen. Der Strom kann beispielsweise einer Ladeschaltung (nicht dargestellt) im Computer 1 zugeführt werden, welche einen Akku 8a im Computer 1 auflädt.

In weiteren Anwendungen kann ein Schaltungsaufbau gemäß Figur 3 auch dazu verwendet werden, ein Spannungssignal auf der Versorgungsleitung VBUS zu detektieren, welches von einem angeschlossenen Peripheriegerät 2 als Aufwachereignis für den Computer 1 erzeugt wird. Der Potentialanstieg auf der Versorgungsleitung VBUS erzeugt dabei am Transistor 14 einen Kollektor-Emitterstrom, der beispielsweise einem bistabilen Leistungsschalter (nicht dargestellt) im Computer 1 zugeführt werden kann. Der Leistungsschalter verbindet anschließend den abgeschalteten Computer 1 mit einer Stromversorgung, sodass der Computer 1 eingeschaltet und hochgefahren wird. Auf diese Weise kann ein Null-Watt Standby-Betrieb des Computers 1 realisiert werden. Denkbar wäre beispielsweise, dass eine Tastatur oder eine Maus über eine USB-Datenschnittstelle 6a, 6b an einen Computer 1 angeschlossen ist, wobei die Tastatur oder Maus über einen integrierten Akku 8b mit Energie versorgt werden. Aus dem Akku 8b kann eine Aufwachspannung an der Versorgungsleitung VBUS erzeugt werden. Dadurch ist es möglich, durch Betätigen der Tastatur oder der Maus einen Computer 1 aus einem Hard-Off-Modus in einen Betriebzustand zu versetzen. Ist der Computer 1 anschließend hochgefahren, so kann dieser wiederum über die USB-Datenschnittstelle 6a, 6b die Peripheriekomponenten Tastatur oder Maus entsprechend versorgen, wobei der Akku 8b in den Peripheriekomponenten aufgeladen wird.

### Bezugszeichenliste

- 1: Computer
- 2: Peripheriegerät
- 3: Display
- 4: Tastatur
- 5: Touchpad
- 6a, 6b: Datenschnittstelle
- 7: Kabel
- 8a, 8b: Akku
- 9a, 9b: elektrische Verbindung
- 10: Host-Controller
- 11: Logik-Baustein
- 12: Diode
- 13: Komparator
- 14: Transistor
- DATA-, DATA+: Datenleitung
- VBUS: Versorgungsleitung
- GND: Masseleitung

## Patentansprüche

1. Anordnung, umfassend einen Computer (1) und ein elektronisches Peripheriegerät (2),
wobei der Computer (1) mit dem Peripheriegerät (2) über ein Kabel (7) einer Datenschnittstelle (6a,6b) verbunden ist und der Computer (1) dazu eingerichtet ist, an einer Versorgungsleitung (VBUS) der Datenschnittstelle (6a,6b) eine elektrische Spannung bereitzustellen, sodass das Peripheriegerät (2) der Versorgungsleitung (VBUS) einen elektrischen Strom zu seiner Energieversorgung entnehmen kann,
**dadurch gekennzeichnet, dass**
das Peripheriegerät (2) dazu eingerichtet ist, an der Versorgungsleitung (VBUS) eine elektrische Spannung bereitzustellen, sodass der Computer (1) der Versorgungsleitung (VBUS) einen elektrischen Strom zu seiner Energieversorgung entnehmen kann.

2. Anordnung nach Anspruch 1,
**dadurch gekennzeichnet, dass**
die vom Peripheriegerät (2) bereitgestellte Spannung größer ist als die vom Computer (1) bereitgestellte Spannung.

3. Anordnung nach Anspruch 1,
**dadurch gekennzeichnet, dass**
die vom Peripheriegerät (2) bereitgestellte Spannung und die vom Computer (1) bereitgestellte Spannung einen gleichen Wert aufweisen, wobei die Spannung alternativ vom Peripheriegerät (2) oder vom Computer (1) bereitgestellt wird.

4. Anordnung nach einem der Ansprüche 1 bis 3,
**dadurch gekennzeichnet, dass**
der Computer (1) Mittel zur Detektion der Spannung auf der Versorgungsleitung (VBUS) und Mittel zur Entnahme von Strom aus der Versorgungsleitung (VBUS) aufweist.

5. Anordnung nach einem der Ansprüche 1 bis 4,
**dadurch gekennzeichnet, dass**
der Computer (1) als Host eingerichtet ist, der die Verbindung, die Befehle sowie den Datenfluss zwischen dem Computer (1) und dem Peripheriegerät (2) als Client steuert, wobei die Datenschnittstelle (6a,6b) dem USB-Standard entspricht.

6. Computer (1) mit einer Datenschnittstelle (6a) zum Anschluss eines Peripheriegerätes (2), wobei der Computer (1) an einer Versorgungsleitung (VBUS) der Datenschnittstelle (6a) eine Spannung zur Versorgung des Peripheriegerätes (2) bereitstellt,
**dadurch gekennzeichnet, dass**
der Computer (1) Mittel aufweist zur Detektion einer Spannung, die dem Computer (1) an der Versorgungsleitung (VBUS) der Datenschnittstelle (6a) bereitgestellt wird, und dass der Computer (1) Mittel aufweist zur Entnahme eines Stroms aus der Versorgungsleitung (VBUS).

7. Computer (1) nach Anspruch 6,
**dadurch gekennzeichnet, dass**
der Computer (1) als Host eingerichtet ist, der die Verbindung, die Befehle sowie den Datenfluss zwischen dem Computer (1) und einem angeschlossenen Peripheriegerät (2) als Client steuert, wobei die Datenschnittstelle (6a) dem USB-Standard entspricht.

8. Peripheriegerät (2) mit einer Datenschnittstelle (6b) zum Anschluss an einen Computer (1),
**dadurch gekennzeichnet, dass**
das Peripheriegerät (2) dazu eingerichtet ist, eine Spannung an einer Versorgungsleitung (VBUS) der Datenschnittstelle (6b) bereitzustellen.

9. Peripheriegerät (2) nach Anspruch 8,
**dadurch gekennzeichnet, dass**
das Peripheriegerät (2) dazu eingerichtet ist, eine Spannung an der Versorgungsleitung (VBUS) nur dann bereitzustellen, falls ein angeschlossener Computer (1) keine Spannung an der Versorgungsleitung (VBUS) bereitstellt.

10. Peripheriegerät (2) nach Anspruch 8 oder 9,
**dadurch gekennzeichnet, dass**
es eine wiederaufladbare Batterie (8b) aufweist, aus der die Spannung an der Versorgungsleitung (VBUS) bereitgestellt wird.

11. Verfahren zur Energieversorgung eines Computers (1),
wobei der Computer (1) über ein Kabel (7) einer Datenschnittstelle (6a,6b) mit einem Peripheriegerät (2) verbunden ist und der Computer (1) dazu eingerichtet ist, über einen Controller-Baustein (10) eine elektrische Spannung bereitzustellen zur Beaufschlagung einer Versorgungsleitung (VBUS) der Datenschnittstelle (6a,6b),
**dadurch gekennzeichnet, dass**
eine Komparatorschaltung (12,13) im Computer (1) die vom Controller-Baustein (10) bereitgestellte Spannung als Referenzwert mit der Spannung auf der Versorgungsleitung (VBUS) vergleicht und ein Schaltelement (14) leitend schaltet, falls die Spannung an der Versorgungsleitung (VBUS) höher ist als der Referenzwert der bereitgestellten Spannung des Controller-Bausteins (10).

12. Verfahren nach Anspruch 11,
**dadurch gekennzeichnet, dass**
der Referenzwert 0 V beträgt, falls der Controller-Baustein (10) keine Spannung bereitstellt.

13. Verfahren nach Anspruch 11 oder 12,
**dadurch gekennzeichnet, dass**
in einem leitenden Zustand des Schaltelements (14) aus der Versorgungsleitung (VBUS) Strom entnommen wird.

14. Verfahren nach Anspruch 13,
**dadurch gekennzeichnet, dass**
der Strom aus der Versorgungsleitung (VBUS) einer Ladeschaltung zum Laden einer wieder aufladbaren Batterie (8a) im Computer (1) zugeführt wird.
